# EUROPÄISCHE PATENTSCHRIFT

(11) **EP 2 850 725 B1**
(45) Veröffentlichungstag und Bekanntmachung des Hinweises auf die Patenterteilung: **07.09.2016**
(21) Anmeldenummer: 13731023.1
(22) Anmeldetag: 16.05.2013
(51) Int. Cl.: H02M 7/217, B23K 9/10

(54) **VERFAHREN ZUR REGELUNG EINER STROMQUELLE, SOWIE STROMQUELLE UND PROZESSREGLER HIERFÜR**
METHOD FOR CONTROLLING A POWER SOURCE, AND POWER SOURCE AND PROCESS CONTROLLER THEREFOR
PROCÉDÉ DE RÉGULATION D'UNE SOURCE DE COURANT, SOURCE DE COURANT ET RÉGULATEUR DE PROCESSUS ASSOCIÉS

(30) Priorität: 18.05.2012 AT 5912012
(43) Veröffentlichungstag der Anmeldung: 25.03.2015
(73) Patentinhaber: Fronius International GmbH, 4643 Pettenbach (AT)
(72) Erfinder: KNOLL, Thomas, A-4551 Ried im Traunkreis (AT); HIESMAYR, Alfred, A-4551 Ried im Traunkreis (AT)
(74) Vertreter: Burger, Hannes
(86) Internationale Anmeldenummer: PCT/AT2013/050109
(87) Internationale Veröffentlichungsnummer: WO 2013/170287

(56) Entgegenhaltungen:
- EP-A2- 0 866 284
- EP-A2- 1 710 897
- JP-A- 10 341 572
- US-A1- 2008 232 141
- US-A1- 2008 284 388
- US-A1- 2010 225 289
- US-A1- 2011 309 054

## Beschreibung

Die Erfindung betrifft ein Verfahren zur Regelung aines Stromquelle nach Anspruch 1 und ein einen digitalen hozessregter nach Anspruch 8.

Die Erfindung betrifft ein Verfahren zur Regelung einer Stromquelle mit einem ersten Wandler zum Umwandeln einer Eingangsspannung in eine Zwischenkreisspannung, einen Zwischenkreiskondensator sowie einen zweiten Wandler zum Wandeln der Zwischenkreisspannung in eine Ausgangsspannung, wobei am Ausgang des zweiten Wandlers ein Prozess und insbesondere die Ausgangsspannung und/oder der Ausgangsstrom mit Hilfe des zweiten Wandlers geregelt wird.

Weiterhin betrifft die Erfindung einen Prozessregler für eine Stromquelle, wobei die Stromquelle einen ersten Wandler zum Umwandeln einer Eingangsspannung in eine Zwischenkreisspannung, einen Zwischenkreiskondensator sowie einen zweiten Wandler zum Wandeln der Zwischenkreisspannung in eine Ausgangsspannung umfasst. Die Regelung umfasst dabei einen Eingang für die Ausgangsspannung und/oder den Ausgangsstrom einen Ausgang zur Ansteuerung des zweiten Wandlers sowie Mittel zur Ausführung eines Regelalgorithmus, bei dem die die Ausgangsspannung und/oder den Ausgangsstrom als Regelgröße und der zweite Wandler als Stellglied eines Regelkreises vorgesehen sind.

Schließlich betrifft die Erfindung eine Stromquelle, umfassend einen ersten Wandler zum Umwandeln einer Eingangsspannung in eine Zwischenkreisspannung, einen Zwischenkreiskondensator sowie einen zweiten Wandler zum Wandeln der Zwischenkreisspannung in eine Ausgangsspannung und eine Regelung der genannten Art, deren Eingang für die Ausgangsspannung und/oder den Ausgangsstrom mit dem Ausgang der Schweißstromquelle und deren Ausgang zur Ansteuerung des zweiten Wandlers mit dem zweiten Wandler verbunden ist.

Verfahren zur Regelung einer Stromquelle der oben genannten Art sind prinzipiell bekannt. Dabei wird eine Eingangswechselspannung in eine Zwischenkreisspannung gewandelt. Alternativ ist es auch möglich eine Eingangsgleichspannung in eine Zwischenkreisspannung zu wandeln, wenn die Eingangsgleichspannung nicht die gewünschte Höhe hat. Diese Zwischenkreisspannung wird von einem Zwischenkreiskondensator auf annähernd konstantem Niveau gehalten. In Folge wird diese Zwischenkreisspannung in eine Ausgangsspannung gewandelt. Die Ausgangsspannung und/oder der Ausgangsstrom werden dabei mit Hilfe des zweiten Wandlers geregelt. Beispielsweise kann ein impulsförmiger Ausgangsstrom bei konstanter Spannung vorgesehen werden, so wie dies etwa für das Impulsschweißen benötigt wird. Weiterhin werden solche Verfahren zum Batterieladen eingesetzt.

Die US 2010/225289 A1 offenbart dazu eine zweistufige Spannungsversorgung mit einer Messschaltung an deren Ausgang sowie einer damit verbundenen Regelung, welche die beiden Schaltstufen der Spannungsversorgung ansteuert.

Die EP 0 866 284 A2 offenbart darüber hinaus eine Klimaanlage mit einer zweistufige Spannungsversorgung für den Kompressor. Ähnlich wie bei der US 2010/225289 A1 umfasst die genannte Spannungsversorgung eine Messschaltung an deren Ausgang sowie einer damit verbundenen Regelung, welche die beiden Schaltstufen der Spannungsversorgung ansteuert.

Die US 2011/309054 A1 offenbart zudem eine zweistufige Schweißstromquelle mit einer Messschaltung am Ausgang sowie einem damit verbundenen Prozeßregler, welche die erste der beiden Schaltstufen ansteuert.

Die US 2008/284388 A1 und die JP 10 341572 A offenbaren weitere zweistufige Spannungsversorgungen. Diese umfassen jeweils eine Messschaltung am Ausgang und am Zwischenkreis, die mit einer Regelung verbunden sind, welche die beiden Schaltstufen der Spannungsversorgung ansteuert.

Ein weiterer Aspekt ist auch, dass ein Übersetzungsverhältnis eines Transformators, welcher wegen der galvanischen Trennung und der Stromübersetzung beispielsweise im zweiten Wandler vorhanden ist, in der Regel möglichst hoch angesetzt wird, sodass die Primärströme vergleichsweise niedrig ausfallen. Dies bedingt eine relativ hohe Zwischenkreisspannung und damit relativ große Luft & Kriechstromstrecken, besonders für primär - sekundär trennende Bauteile. Häufig wird ein hohes Übersetzungsverhältnis des genannten Transformators aber dadurch limitiert, dass benötigte und industriell verfügbare Bauteile einen bestimmten, jedoch für die oben erwähnten Luft & Kriechstromstrecken zu kleinen Pinabstand aufweisen. Eine deswegen vorgesehene, kleinere Zwischenkreisspannung bedingt jedoch wiederum hohe Primärströme und den Einsatz von teuren Bauteilen, insbesondere teuren Halbleitern in Gleichund Wechselrichtern der genannten Stromquelle. Dies ist wie leicht einsehbar ist ein unbefriedigender Zustand, da die Leistungsfähigkeit einer Stromquelle durch diese äußeren Randbedingungen unnötig eingeschränkt wird.

Die Aufgabe der Erfindung ist es daher, ein verbessertes Verfahren zur Regelung einer Stromquelle im Rahmen eines Schweissprozesses oder eines Batterieladeprozesses, einen verbesserten Prozessregler für eine Stromquelle sowie eine verbesserte Stromquelle anzugeben. Insbesondere soll die Schweissqualität oder Qualität beim Laden einer Batterie bei gleichbleibendem Leistungsteil verbessert werden.

Die Aufgabe der Erfindung wird mit einem Verfahren der eingangs genannten Art gelöst, bei dem von einem digitalen Prozessregler zumindest ein Parameter und/oder dessen Wert zur Regelung der Zwischenkreisspannung für den ersten Wandler in Abhängigkeit eines Ereignisses am Ausgang vorgegeben wird.

Die Aufgabe der Erfindung wird weiterhin mit einem Prozessregler der eingangs genannten Art gelöst, umfassend einen Ausgang, welcher zur Beeinflussung der Zwischenkreisspannung in Abhängigkeit eines Schweißprozesses oder eines Batterieladeprozesses vorbereitet ist. Schließlich wird die Aufgabe der Erfindung durch eine Stromquelle der eingangs genannten Art gelöst, bei welcher der Ausgang der Regelung zur Beeinflussung der Zwischenkreisspannung mit dem ersten Wandler oder einer weiteren mit dem ersten Wandler verbundenen Regelung verbunden ist.

Erfindungsgemäß kann also die Zwischenkreisspannung an einen Schweissprozess oder einen Batterieladeprozess angepasst, das heißt variiert werden, d.h., dass aufgrund eines in kürze auftretenden Zustandes am Ausgang eine Anpassung der Zwischenkreisspannung erfolgt, um immer ausreichend Energie zur Verfügung zu stellen und ein Einbrechen der Zwischenkreisspannung zu vermeiden. Durch diesen Eingriff auf den ersten Wandler können die genannten Prozesse maßgeblich verbessert werden. Besonders vorteilhaft ist dabei, dass das Leistungsteil als solches, das heißt die beiden Wandler, an sich unverändert bleiben können. Die Qualitätssteigerung wird dadurch erreicht, dass diese auf eine neuartige Weise angesteuert werden. Die Erfindung kann somit mit besonders geringem technischen Aufwand in die Praxis umgesetzt werden. Des weiteren ist auch die Nachrüstung bestehender Leistungsteile auf einfache Weise möglich.

Ein weiterer Aspekt ist auch, dass sich durch die Variation der Zwischenkreisspannung im Mittel eine Zwischenkreisspannung ergibt, die kleiner als deren Maximalwert ist. Luft & Kriechstromstrecken werden aber üblicherweise nicht auf den Maximalwert der Zwischenkreisspannung ausgelegt, sondern auf deren Mittelwert. Auch sind manche Bauteile resistent gegen kurzfristige Spannungsspitzen beziehungsweise Spannungsüberhöhungen. Auf diese Weise ist es möglich, Stromquellen ohne die erwähnten Nachteile aufzubauen. Insbesondere kann das Übersetzungsverhältnis eines Transformators, welcher beispielsweise im zweiten Wandler vorhanden ist, hoch angesetzt werden was zu relativ geringen Primärströmen führt. Somit ist es bei höherer Leistungsfähigkeit der Stromquelle möglich, einerseits Bauteile mit vergleichsweise geringem Pinabstand beziehungsweise vergleichsweise geringer Spannungsresistenz zu verwenden, andererseits aber auch Bauteile mit vergleichsweise geringer Strombelastbarkeit. Diese scheinbar paradoxe Situation ergibt sich durch den im Mittel geringeren Wert einer variierenden Zwischenkreisspannung.

Außerdem entsteht durch die neuartige Reglerstruktur ein Dimensionierungsvorteil bei der Auslegung des ersten Wandlers. Das kurzzeitige Anheben der Zwischenkreisspannung liefert nur in diesem kurzen Zeitraum eine Ausgangskennlinie die hohe Ausgangsleistungen zulässt. In der Praxis wird im statischen Stromquellenbetrieb dieser Bereich der Ausgangskennlinie so gut wie nie genutzt, bzw. soll die Stromquelle für den Dauerbetrieb ja eigentlich nicht für diesen Bereich dimensioniert sein.

Die über einen größeren Zeitraum reduzierte Zwischenkreisspannung begrenzt die mögliche Ausgangsleistung der Stromquelle. So entsprechen z.B. 500A Ausgangsstrom bei einem 1:10 Trafo 50A Primärstrom. Stehen 700Vdc am Zwischenkreis zur Verfügung so können am Ausgang theoretisch 700Vdc x 50 = 35 kW abgegeben werden. Reduziert man die Zwischenkreisspannung z.B. auf 650V, so kann nur mehr eine Leistung von 32,5 kW abgegeben werden.

Die allermeisten Bauteile können kurzzeitig mit höheren Leistungen beaufschlagt werden. Somit kann z.B. eine Induktivität des Wandlers deutlich geringer dimensioniert werden.

Die Erfindung kann somit auch darin gesehen werden, zu erkennen, dass die Variation einer Zwischenkreisspannung zu Vorteilen führt, obwohl die Zwischenkreisspannung traditionell möglichst konstant gehalten wird, d.h. eine Gleichspannung im Zwischenkreis angestrebt wird. Trotz der Abkehr von diesem Prinzip kann die Spannung im Zwischenkreis natürlich wenigstens temporär konstant gehalten werden.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Sollwert zu einem berechneten Zeitpunkt vor dem Ereignis vorgegeben wird und die Zwischenkreisspannung bis zum Zeitpunkt angepasst wird. Auf diese Weise kann sichergestellt werden, dass bei Eintritt des Ereignisses eine ausreichende Leistung zur Verfügung steht und die Zwischenkreisspannung nur wenig oder überhaupt nicht einbricht.

Vorteilhaft ist es, wenn die Zwischenkreisspannung mit Hilfe des ersten Wandlers geregelt wird und ein Sollwert der Zwischenkreisspannung in Abhängigkeit einer zukünftigen Ausgangsspannung und/oder eines zukünftigen Ausgangsstroms vorgegeben wird. Bei dieser Variante folgt die Zwischenkreisspannung - anders als bei einer Steuerung derselben - besonders gut einem in Abhängigkeit der Ausgangsspannung und/oder des Ausgangsstroms vorgegeben Sollwert. Der Prozessregler "blickt" zudem gleichsam in die Zukunft und bereitet die Spannung im Zwischenkreiskondensator auf zukünftige Anforderungen vor. Beispielsweise "weiß" der Prozessregler, wann beim Impulsschweißen der nächste Impuls zu setzen ist, und kann daher entsprechend vorsorglich darauf reagieren, indem die Zwischenkreisspannung angehoben wird, um eine möglichst ideale Impulsform realisieren zu können. Dabei kann vorgesehen sein, dass der Prozessregler auf eine Prozessdatenbank zugreift, um die entsprechenden Informationen zu erhalten ("preselected control signal from process data base"). Natürlich kann zur unmittelbaren Beeinflussung der Zwischenkreisspannung auch direkt die Stellgröße des Reglers in Abhängigkeit eines Prozesses angepasst werden, um ein rasches Erhöhen der Zwischenkreisspannung zu bewirken.

Besonders vorteilhaft ist es in diesem Zusammenhang also, wenn ein Ausgangsstrom impulsförmig ist (insbesondere mit einem Gleichanteil) und die Zwischenkreisspannung vor einem Impuls angehoben wird. Auf diese Weise kann die Steilheit des Stromanstiegs vergrößert werden, sodass sich der Impuls besser an eine Idealform annähert. Besonders vorteilhaft ist es in diesem Zusammenhang, wenn die Zwischenkreisspannung vor einem Impuls so rechtzeitig angehoben wird (vorzugsweise 0 ms bis 5 ms vor dem Puls), dass sie zu Beginn des Stromimpulses ihren Maximalwert erreicht, sodass auch ein maximaler Stromanstieg erzielbar ist.

Besonders vorteilhaft ist es, wenn die Zwischenkreisspannung abgesenkt wird, wenn der impulsförmige Ausgangsstrom seinen oberen Sollwert erreicht hat. Auf diese Weise wird die Zwischenkreisspannung sofort wieder gesenkt, nachdem die Anhebung ihren Zweck erfüllt hat. Auf diese Weise kann der Mittelwert der Zwischenkreisspannung stark reduziert werden. Damit können geringer dimensionierte Bauelemente eingesetzt werden, wodurch die Herstellungskosten wesentlich gesenkt werden können.

Vorteilhaft ist es, wenn die Zwischenkreisspannung bei einem kürzeren Impuls stärker angehoben wird als bei einem längeren Impuls. Auf diese Weise kann der Effekt des Anhebens der Zwischenkreisspannung bei gleichbleibendem Mittelwert derselben optimal ausgenutzt werden. Beispielsweise kann die Zwischenkreisspannung bei einem Pulsdauerverhältnis von 30% doppelt so hoch angehoben werden wie bei einem Pulsdauerverhältnis von 60%.

Vorteilhaft ist es auch, wenn rechtzeitig vor einem Impuls dahingehend in den Sollwert der Zwischenkreisspannung bzw. direkt in die Stellgröße des Reglers des ersten Wandlers eingegriffen wird, dass die Zwischenkreisspannung nicht so stark bzw. überhaupt nicht einbricht. Die Zwischenkreisspannung kann also deutlich konstanter gehalten werden als das nur mit dem normalen Reglerparametern möglich wäre, da auch hier schon vor Auftreten eines Ereignisses im Prozess darauf reagiert werden kann. Analog gilt diese Überlegung auch z.B. bei einem Pulsende, bei dem schon vorher oder genau zum Pulsende ein Überschwingen der Zwischenkreisspannung reduziert oder verhindert werden kann.

Vorteilhaft ist es weiters, insbesondere bei einer Schweißstromquelle, wenn nach Detektieren eines Startvorganges die Zwischenkreisspannung in einer ausreichend großen Zeit vor dem Beginn des Fließens des Ausgangsstromes angehoben wird. Dadurch steht beim Prozessstart mehr Ausgangsleistung zur Verfügung bzw. wird der Ausgangsstromanstieg beschleunigt.

Vorteilhaft ist es zudem, wenn die Zwischenkreisspannung im Leerlauf der Stromquelle abgesenkt wird. Diese Variante bietet Vorteile, da manche Schweißstromquellen bzw. Batterieladegeräte einen großen Teil der Lebensdauer im Leerlauf betrieben werden. Auf diese Weise wird die dauerhafte Bauteilbelastung mancher Bauteile (z.B Zwischenkreiskondensatoren) reduziert und deren Lebensdauer erhöht.

Weiters ist es vorteilhaft, insbesondere bei einem Batterieladegerät, wenn die Zwischenkreisspannung bei einem Prozess, der eine variable Ausgangsspannung in Abhängigkeit des Prozesses benötigt, in Abhängigkeit der Ausgangsspannungshöhe erhöht oder erniedrigt wird. Dadurch kann der zweite Wandler ständig in einem optimalen Arbeitspunkt betrieben werden, z.B. können Schaltverluste in diesem Wandler über den gesamten Ausgangsspannungsbereich maximal reduziert werden.

Günstig ist es, wenn der erste Wandler einen passiven Gleichrichter sowie einen damit verbundenen Spannungsteller umfasst. Auf diese Weise kann die Zwischenkreisspannung gut eingestellt werden. Des Weiteren stellen der passive Gleichrichter sowie der Spannungsteller erprobte Mittel dar, weswegen die Erfindung mit vergleichsweise geringem technischen Aufwand in die Praxis umgesetzt werden kann und gleichzeitig zuverlässig ist.

Günstig ist es auch, wenn der erste Wandler einen gesteuerten Gleichrichter umfasst. Dies ist ein weiteres erprobtes Mittel zur Einstellung einer Zwischenkreisspannung.

Günstig ist es zudem, wenn der zweite Wandler einen Wechselrichter, einen damit verbundenen Transformator und einen damit verbundenen Gleichrichter umfasst. Auf diese Weise kann die Zwischenkreisspannung gut in eine gewünschte Ausgangsspannung gewandelt werden. Des Weiteren stellen der Wechselrichter, der Transformator sowie der Gleichrichter erprobte Mittel dar, weswegen die Erfindung mit vergleichsweise geringem technischen Aufwand in die Praxis umgesetzt werden kann und gleichzeitig zuverlässig ist.

Vorteilhaft ist es schließlich, wenn die Strom- bzw. Spannungsquelle als Schweißstromquelle oder Batterieladegerät ausgebildet ist. Häufig werden bei diesen Geräten nämlich impulsförmige Stromverläufe benötigt, welche sich mit Hilfe der Erfindung besonders gut realisieren lassen.

Zum besseren Verständnis der Erfindung wird diese anhand der nachfolgenden Figuren näher erläutert.

Es zeigen jeweils in stark schematisch vereinfachter Darstellung:
- Fig. 1: eine erste schematisch dargestellte Variante einer Stromquelle mit zwei getrennten Regelkreisen für die Zwischenkreisspannung und die Ausgangsspannung beziehungsweise den Ausgangsstrom;
- Fig. 2: eine zweite schematisch dargestellte Variante einer Stromquelle mit einem gemeinsamen Regelkreis für die Zwischenkreisspannung und die Ausgangsspannung beziehungsweise den Ausgangsstrom;
- Fig. 3: ein Beispiel für den ersten Wandler mit einem passiven Gleichrichter sowie einen damit verbundenen Spannungsteller;
- Fig. 4: ein weiteres Beispiel für den ersten Wandler mit einem gesteuerten Gleichrichter;
- Fig. 5: ein Beispiel für den zweiten Wandler mit einem Wechselrichter, einem Transformator und einem Gleichrichter;
- Fig. 6: ein beispielhaftes Strom-Zeit-Diagramm mehrerer impulsförmiger Verläufe des Ausgangsstroms;
- Fig. 7: ein beispielhaftes kombiniertes Diagramm für die zeitlichen Verläufe von Ausgangsstrom, Zwischenkreisspannung und Zwischenkreisleistung;
- Fig. 8: ein Beispiel, wie die vorgestellte Regelung mit Hilfe einer sägezahnförmigen Hilfsspannung angesteuert wird;
- Fig. 9: den zeitlichen Verlauf der Zwischenkreisspannung, welche trotz Stromimpuls am Ausgang im Wesentlichen konstant bleibt;
- Fig. 10: den Verlauf der Zwischenkreisspannung und des Ausgangsstroms bei einem Startvorgang einer Schweißung und
- Fig. 11: den Verlauf ausgewählter Kenngrößen bei einem Batterieladevorgang.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

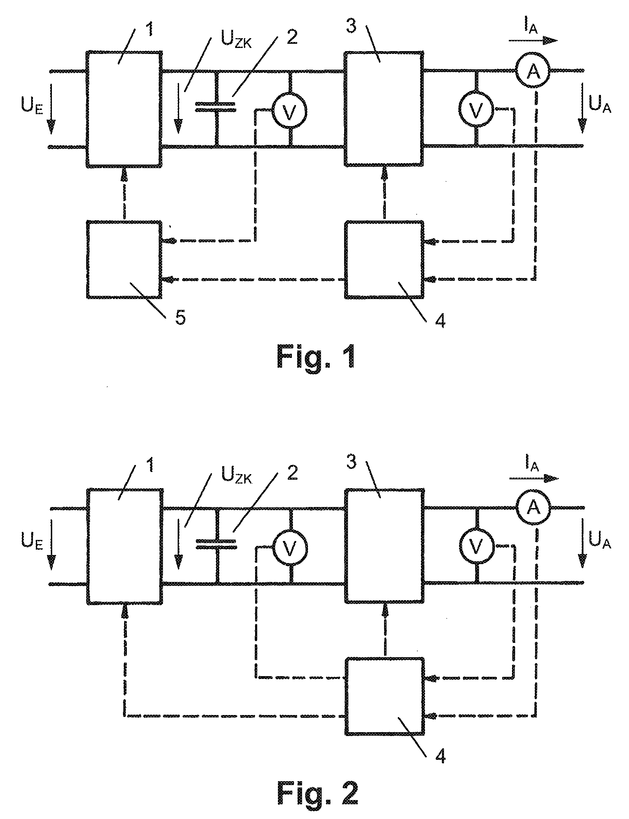

Fig. 1 zeigt eine Stromquelle, umfassend einen ersten Wandler 1 zum Umwandeln einer Eingangsspannung U_{E} in eine Zwischenkreisspannung U_{ZK}, einen Zwischenkreiskondensator 2 sowie einen zweiten Wandler 3 zum Wandeln der Zwischenkreisspannung U_{ZK} in eine Ausgangsspannung U_{A}- Weiterhin zeigt Fig. 1 eine Regelung 4, umfassend zwei Eingänge für die Ausgangsspannung U_{A} und den Ausgangsstrom I_{A} einen Ausgang zur Ansteuerung des zweiten Wandlers 3 sowie Mittel zur Ausführung eines Regelalgorithmus, bei dem die die Ausgangsspannung U_{A} und der Ausgangsstrom I_{A} als Regelgröße und der zweite Wandler 3 als Stellglied eines Regelkreises vorgesehen sind. Denkbar wäre auch, dass die Regelung 4 nur einen Eingang für die Ausgangsspannung U_{A} oder den Ausgangsstrom I_{A} umfasst und der Regelalgorithmus dementsprechend für die Regelung der Ausgangsspannung U_{A} oder des Ausgangsstroms I_{A} ausgelegt ist. Weiterhin umfasst die Regelung 4 einen Ausgang, welcher zur Beeinflussung der Zwischenkreisspannung U_{ZK} mit Hilfe des ersten Wandlers 1 in Abhängigkeit eines Schweißprozesses oder Batterieladeprozesses vorbereitet ist. Konkret wird von der Regelung 4 ein Sollwert für die Zwischenkreisspannung U_{ZK} an die Regelung 5 übermittelt, welche ihrerseits die Zwischenkreisspannung U_{ZK} mit Hilfe des ersten Wandlers 1 regelt.

Im vorliegenden Fall sind für die Messung der Zwischenkreisspannung U_{ZK} und der Ausgangsspannung U_{A} Spannungsmessgeräte V vorgesehen, welche von beliebiger Bauart sein können. Beispielsweise können dafür Analog-Digital-Wandler eingesetzt werden, welche den gemessenen Spannungswert digital an die Regelung 4, 5 übermitteln. Häufig wird eine Regelung 4, 5 auch durch einen Mikrocontroller gebildet, welche oft standardmäßig über Eingänge zur Spannungsmessung verfügen.

Weiterhin ist für die Messung des Ausgangsstroms I_{A} ein Strommessgerät A vorgesehen, welches ebenfalls von beliebiger Bauart sein kann. Die Strommessung kann beispielsweise mithilfe einer Spannungsmessung an einem Strommesswiderstand (engl.: "Shunt") durchgeführt werden. Die Spannungsmessung als solche kann wiederum wie bereits zuvor beschrieben erfolgen.

Generell kann die Regelung 4 und 5 als digitaler Prozessregler implementiert sein. Dieser kann dabei sowohl in Hardware oder in Software aufgebaut sein. Wird die Regelung 4 und/oder 5 in Software implementiert, dann führen die Programmschritte zur Laufzeit des Programms den Regelalgorithmus aus. Zur Speicherung des Programms kann der Mikrocontroller auch einen integrierten Speicher umfassen. Beide Regelungen 4 und 5 können natürlich auch in ein und derselben Schaltung, in ein und demselben Mikrocontroller sowie in ein und demselben Programm integriert sein. In diesem Fall ist die dargestellte Begrenzung der Regelungs-Blöcke 4 und 5 eher funktional als physikalisch zu verstehen.

Im vorliegenden Beispiel wird die Zwischenkreisspannung U_{ZK} und die Ausgangsspannung U_{A} und/oder der Ausgangsstrom I_{A} in getrennten Regelkreisen geregelt. Die Regelung 4 gibt lediglich einen Sollwert für die Zwischenkreisspannung U_{ZK} an die Regelung 5 weiter. Dies ist jedoch keinesfalls zwingend wie Fig. 2 zeigt.

In Fig. 2 ist eine Anordnung dargestellt, welche der in Fig. 1 dargestellten Anordnung sehr ähnlich ist. Im Unterschied dazu ist im digitalen Prozessregler aber nur mehr eine Regelung 4 enthalten, welche sowohl die die Zwischenkreisspannung U_{ZK} als auch die Ausgangsspannung U_{A} beziehungsweise den Ausgangsstrom I_{A} regelt. Hierfür können entsprechende mehrdimensionale Regler eingesetzt werden.

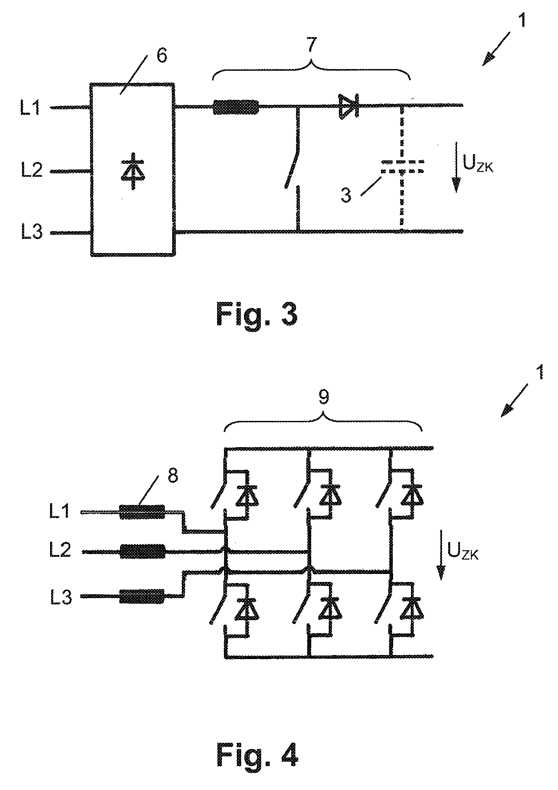

Fig. 3 zeigt eine konkrete Ausführungsform des ersten Wandlers 1, welcher einen passiven Gleichrichter 6 sowie einen damit verbundenen Spannungsteller 7 umfasst. Der Gleichrichter 6 wird dabei über einen Drehstromanschluss L1..L3 versorgt und erzeugt daraus eine Gleichspannung, die vom Spannungssteller 7 hochgesetzt wird. Prinzipiell könnte aber auch ein Spannungssteller 7 eingesetzt werden, welcher die Spannung tiefsetzt. Der Kondensator 3 ist hier strichliert gezeichnet, da er in den Figuren 1 und 2 eigentlich nicht vom ersten Wandler 1 umfasst ist, dessen Darstellung jedoch zum Verständnis des Spannungsstellers 7 vorteilhaft ist.

Fig. 4 zeigt eine weitere Ausführungsform des ersten Wandlers 1, welcher einen gesteuerten Gleichrichter 9 umfasst. Bei dieser Variante werden die Schalter 9 des Gleichrichters, welche beispielsweise durch IGBTs (Insulated Gate Bipolar Transistor) oder durch MOSFETs (Metall Oxide Semiconductor Field Effect Transistor) gebildet sein können, so angesteuert, dass die Spannung einerseits gleichgerichtet wird, wegen der Induktivitäten 8 und des Zwischenkreiskondensators 3 aber auch der Höhe nach eingestellt werden kann. Die Induktivitäten können dabei vom ersten Wandler 1 umfasst, aber auch Teil des Stromnetzes sein, an welches die Stromquelle angeschlossen ist.

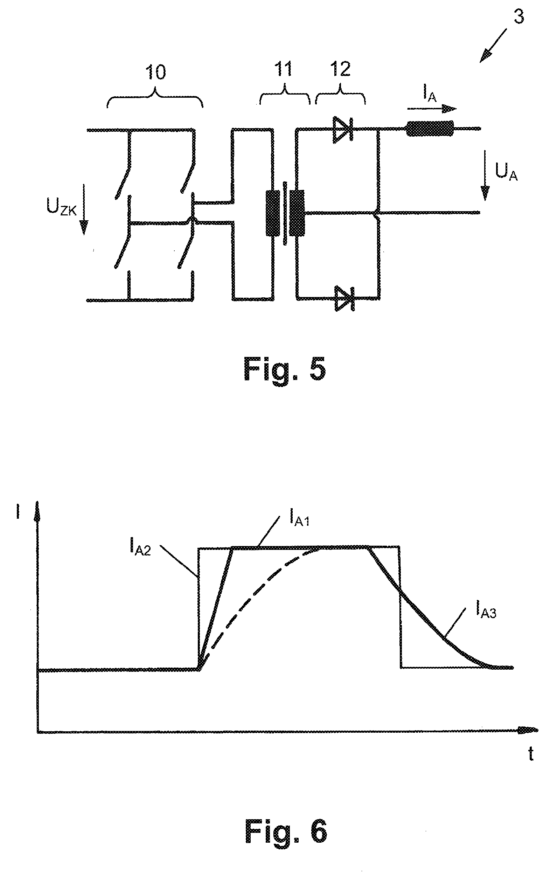

Fig. 5 zeigt eine Ausführungsform des zweiten Wandlers 3, welcher einen Wechselrichter 10, einen damit verbundenen Transformator 11 und einen damit verbundenen Gleichrichter 12 umfasst. Die Zwischenkreisspannung U_{ZK} kann auf diese Weise in eine Ausgangsspannung U_{A} gewandelt werden, wobei der Ausgang vom Zwischenkreis galvanisch getrennt ist. Die nicht näher bezeichnete Induktivität am Ausgang kann Teil des zweiten Wandlers 3, aber auch Teil des mit dem zweiten Wandler 3 versorgten Geräts (nicht dargestellt) sein.

In Fig. 6 ist ein Strom-Zeit-Diagramm I über t dargestellt. Anhand eines impulsförmigen Verlaufs des Stroms I (hier mit einem Gleichanteil) wird gezeigt, welche Auswirkungen die Beeinflussung der Zwischenkreisspannung U_{ZK} hat. Durch Anheben der Zwischenkreisspannung U_{ZK} kommt es zu einer besseren Annäherung des Stromverlaufs I_{A1} (mit dicker Linie dargestellt) an den idealen impulsförmigen Verlauf I_{A2} (mit dünner Linie dargestellt). Die ideale Impulsform I_{A2}wird also auf diese Weise besser angenähert, als bei einem Stromverlauf I_{A3} (strichlierte Linie) ohne Anhebung der Zwischenkreisspannung U_{ZK}. Vor allem wird der obere Wert des Stromimpulses beim Verlauf I_{A1} schneller erreicht als beim Verlauf I_{A3}.

Darauf aufbauend kann nun der Prozessregler 4, 5 entsprechend vor einem bevorstehenden Ereignis reagieren, da dem Prozessregler 4, 5 der Zeitpunkt unmittelbar bevorstehender Ereignisse wie ein Startvorgang, Schweißimpulsanfang, Schweißimpulsende, Kurzschlusslösung, usw. bekannt ist. Ist also für das bevorstehende Ereignis ein erhöhter Ausgangsstrom I_{A} erforderlich, erhöht der Prozessregler 4,5 entsprechend rechtzeitig - im Wesentlichen gemäß dem Stromverlauf I_{A1} - vor dem Ereignis den erforderlichen Parameter bzw. dessen Wert (beispielsweise den Sollwert für die Zwischenkreisspannung U_{ZK}), sodass bei Eintritt des Ereignisses der erforderliche Ausgangsstrom I_{A} zur Verfügung steht, also ausreichend Energie im Zwischenkreis gespeichert ist. Dies wird entsprechend mit einem schnellen Stromanstieg erreicht, welcher wiederum durch das Eingreifen des Prozessreglers 4, 5 vor dem Ereignis gewährleistet ist.

Grundsätzlich erfolgt die Änderung bzw. Regelung oder Überwachung der Zwischenkreisspannung U_{ZK} im eigenständigen Regelkreis des Wandlers 1. Für bevorstehende Änderungen wird allerdings dem Wandler 1 eine Änderung eines Parameters vom Regler 4 (Prozeßregler) vorgegeben, da die Regelung 5 nicht über die Ereignisse am Ausgang der Stromquelle Kenntnis hat, wodurch die Regelung 4 eingreift Beispielsweise wird als Parameter die Zwischenkreisspannung U_{ZK} bzw. deren Sollwert, ein Schaltzeitpunkt des Wandlers 1, eine Pulsbreite, ein Spitzenstrom für den zumindest einen Schalter des Wandlers 1 und/oder ähnliche Parameter vorgegeben. Somit wird erreicht, dass die Zwischenkreisspannung U_{ZK} sehr schnell und effektiv geändert wird, da diese Parameter einen direkten Einfluss auf die Zwischenkreisspannung U_{ZK} haben. Das heißt, dass aufgrund der Wahl des vorzugebenden bzw. zu verändernden Parameters die Zeit für die Regelung auf ein Minimum reduziert wird, da keine Zwischenschritte für die Regelung erforderlich sind.

Somit ist zum Zeitpunkt des Ereignisses die Zwischenkreisspannung U_{ZK} rechtzeitig erhöht bzw. angepasst, sodass ein schnelle Stromanstieg ausgangsseitig möglich ist, ohne dass die Zwischenkreisspannung U_{ZK} im Wesentlichen unter den eingestellten Schwellwert sinkt, d.h., dass durch das Erhöhen der Zwischenkreisspannung U_{ZK} bei Lieferung einer hohen Ausgangsenergie ein Einbruch dieser unter einen definierten Schwellwert vermieden wird. Auf grund des Ereignisses wird der Zwischenkreis entsprechend belastet und somit sinkt auch die Zwischenkreisspannung U_{ZK} im Wesentlichen wieder ab, wobei die Erhöhung immer derart erfolgt, dass die Zwischenkreisspannung U_{ZK} trotz dieses Absinkens nicht unter einen definierten Schwellwert sinkt Auf diesen Schwellwert sind auch die Bauteile dimensioniert, wobei die kurzfristigen Änderungen im Wesentlichen keinen Einfluss auf den Mittelwert der Zwischenkreisspannung U_{ZK} haben und somit die Bauteile dadurch nicht überlastet werden.

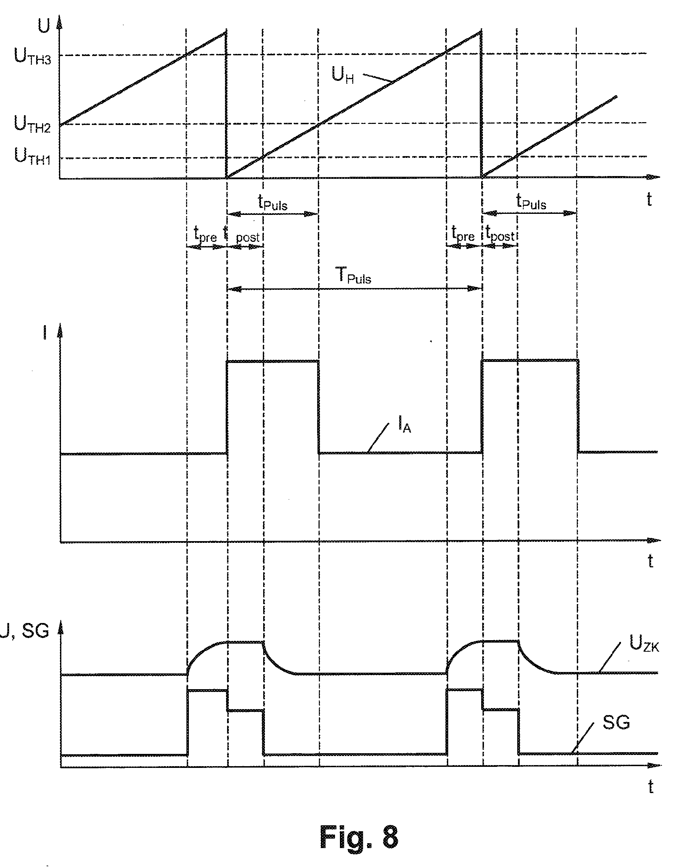

Die Zeitpunkte und Zeitdauern vor dem Ereignis sind aus den Fig. 8, 9 und 10 ersichtlich. Hierbei handelt es sich um einen Stromimpuls, ein Überschwingverhalten und einen Startvorgang beim Schweißen.

Bevorzugt erfolgt die Anpassung des Sollwerts bis zu 10ms vor Eintritt des Ereignisses. Entsprechend wird die Zeitdauer bis zum Zeitpunkt vom Prozessregler 4,5 berechnet bzw. ermittelt. Die Zeitdauer ist im Wesentlichen von der erforderlichen Ladezeit für den Kondensator 2 des Zwischenkreises abhängig. Dies erfolgt beispielsweise durch Zugriff auf eine Datenbank, in welcher zu jedem Ereignis die erforderlichen Zeitdauern in Abhängigkeit von Ausgangsspannung UA und Ausgangsstrom I_{A} hinterlegt sind, oder durch direkte Berechnung vor jedem Ereignis.

Bei einem Schweißprozess oder einem Batterieladeprozess wird der Ausgangsstrom I_{A} entsprechend einer voreingestellten Kennlinie geregelt. Eine derartige Kennlinie wird dabei aus einer Vielzahl von Parametern gebildet, welche entsprechend während des Prozesses kontinuierlich überwacht und geregelt werden. Anhand dieser Parameter stellt der Prozessregler 4, 5 entsprechend den Zeitpunkt des bevorstehenden Ereignisses fest.

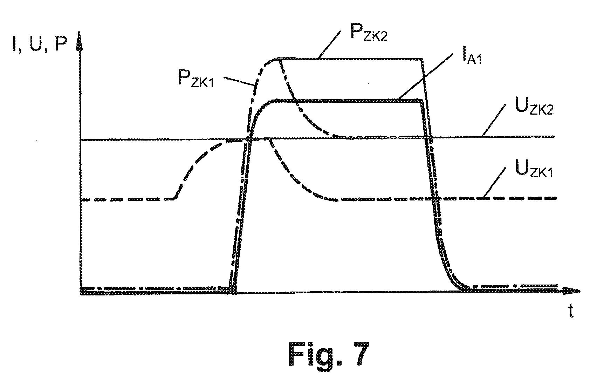

In Fig. 7 ist nun ein kombiniertes Diagramm Strom I über Zeit t, Spannung U über Zeit t sowie Leistung P über Zeit t dargestellt. Anhand eines impulsförmigen Verlaufs des Stroms I_{A1} (hier ohne Gleichanteil) wird gezeigt, wie die Zwischenkreisspannung U_{ZK} beeinflusst wird. Konkret wird die Zwischenkreisspannung U_{ZK1} (strichlierte Linie) vor dem Stromimpuls I_{A1} angehoben. In diesem Beispiel geschieht dies so rechtzeitig, dass die Zwischenkreisspannung U_{ZK1} ihren oberen Sollwert bei Beginn des Impulses erreicht hat. Auf diese Weise kann der Stromanstieg im Vergleich zu einem Impuls ohne Anhebung der Zwischenkreisspannung U_{ZK1} merklich erhöht werden. Auf diese Weise kann der Prozessregler zukünftige Ereignisse in einem Schweissprozess oder einem Batterieladeprozess berücksichtigen. Hat der Stromimpuls I_{A1} seinen oberen Sollwert erreicht, so wird die Zwischenkreisspannung U_{ZK1} wieder auf ihr ursprüngliches Niveau gesenkt. Die Zwischenkreisspannung U_{ZK1} hat somit auf den Stromanstieg dieselbe Wirkung wie eine Zwischenkreisspannung U_{ZK2} (dünne Linie), die ständig auf hohem Niveau gehalten wird, weist jedoch einen niedrigeren Mittelwert auf als diese. Zusätzlich ist in Fig. 7 noch der Verlauf der Leistung P_{ZK1} (strichpunktierte Linie) bezogen auf die Zwischenkreisspannung U_{ZK1} sowie der Verlauf der Leistung P_{ZK2} (dünne Linie) bezogen auf die Zwischenkreisspannung U_{ZK2} dargestellt.

Impulsförmige Stromverläufe werden insbesondere beim Impulsschweißen oder Batterieladen benötigt, weswegen es besonders vorteilhaft ist, wenn die Stromquelle als Schweißstromquelle oder Batterieladegerät ausgebildet ist. Durch die im Mittel geringere Zwischenkreisspannung U_{ZK1} können Kriechstromstrecken kürzer ausgebildet werden als bei konstant hoher Zwischenkreisspannung U_{ZK2}. Damit können Bauteile mit vergleichsweise geringem Pinabstand beziehungsweise geringerer Spannungsresistenz verwendet werden, welche leicht verfügbar und in der Regel kostengünstiger sind.

Außerdem sind viele Bauteile in der Lage, kurzzeitig größere Verlustleistungen auszuhalten als im Dauerbetrieb. Wie in Figur 7 ersichtlich wird, ist es mit einer Zwischenkreisspannung U_{ZK2} dauerhaft möglich eine Leistung P_{ZK2} aus der Stromquelle zu beziehen. Mit einer Zwischenkreisspannung U_{ZK1} erreicht man dynamisch ein Stromquellenverhalten dass gleich ist dem einer Stromquelle mit U_{ZK2}, allerdings können für den statischen Betrieb Bauteile vorteilhafter dimensioniert werden. Beispielsweise können Induktivitäten des Wandlers 1 im Querschnitten der Wicklung reduziert werden, usw.

Vorteilhaft ist es im Zusammenhang mit den in Fig. 6 und 7 gezeigten Verläufen, wenn die Zwischenkreisspannung U_{ZK1} bei einem kürzeren Impuls stärker angehoben wird als bei einem längeren Impuls. Auf diese Weise kann der Effekt des Anhebens der Zwischenkreisspannung U_{ZK1} bei gleichbleibendem Mittelwert derselben optimal ausgenutzt werden. Beispielsweise kann die Zwischenkreisspannung bei einem Pulsdauerverhältnis von 30% doppelt so hoch angehoben werden wie bei einem Pulsdauerverhältnis von 60%. Die erwähnte Vorgangsweise ist insbesondere dann günstig, wenn die Zwischenkreisspannung U_{ZK1}nicht wie in Fig. 7 dargestellt gleich gesenkt wird, wenn der Stromimpuls I_{A1} seinen oberen Sollwert erreicht hat, sondern erst am Ende des Stromimpuls I_{A1}.

Zudem ist es möglich, die Zwischenkreisspannung U_{ZK1} an einen variierenden Ausgangsstrom I_{A}, I_{A1} und eine gleichzeitig variierende Ausgangsspannung U_{A} anzupassen. Insbesondere können der Ausgangsstrom I_{A}, I_{A1} und die Ausgangsspannung U_{A} impulsförmig sein. In den Figuren 8 bis 11 sind weitere illustrative Beispiele dazu gezeigt.

Fig. 8 zeigt ein Beispiel, wie die vorgestellte Regelung 4, 5 konkret angesteuert werden könnte. In den Diagrammen ist dazu eine sägezahnförmige Hilfsspannung U_{H}, der Ausgangsstrom I_{A}, die Zwischenkreisspannung U_{ZK}, sowie eine Stellgröße SG des Prozessreglers 4, 5 dargestellt. Mittels der Hilfsspannung U_{H} und verschiedener Spannungsschwellwerte U_{TH1}..U_{TH3} kann auf einfache Weise ein zeitlicher Ablauf für den Ausgangsstrom I_{A}, die Zwischenkreisspannung U_{ZK}, sowie die Stellgröße SG des Prozessreglers 4, 5 festgelegt werden. Beispielsweise kann dies mit Hilfe von Komparatoren erfolgen, an deren ersten Eingang der betreffende Schwellwert U_{TH1}..U_{TH3} und an deren zweiten Eingang die Hilfsspannung U_{H} angelegt wird. Selbstverständlich können die betreffenden Zeitpunkte auch anders erzeugt werden, beispielsweise mit Hilfe von digitalen Timern.

Nach der fallenden Flanke der Hilfsspannung U_{H} beginnt im dargestellten Beispiel der Impuls des Ausgangsstroms I_{A}, dessen Länge t_{Puls} mit Hilfe des dritten Schwellwertes U_{TH3} eingestellt werden kann. Mit Hilfe des ersten Schwellwertes U_{TH1} kann die Zeitspanne tₚᵣₑ eingestellt werden, um welche die Zwischenkreisspannung U_{ZK} vor Beginn des Stromimpulses angehoben wird. Die Zeitspanne tₚᵣₑ liegt vorteilhaft im Bereich von 0 ms bis 5 ms. Mit Hilfe des zweiten Schwellwertes U_{TH2} wird die Zeitspanne tₚₒₛₜ eingestellt, nach welcher der Prozessregler 4, 5 vom Zustand "Zwischenkreisspannung anheben" wieder in den Normalbetrieb übergeht. In der Fig. 8 ist darüber hinaus gut zu sehen, dass die Stellgröße SG bei Pulsbeginn zudem etwas zurückgenommen wird, sodass es zu keinem Überschwingen des Impulses kommt.

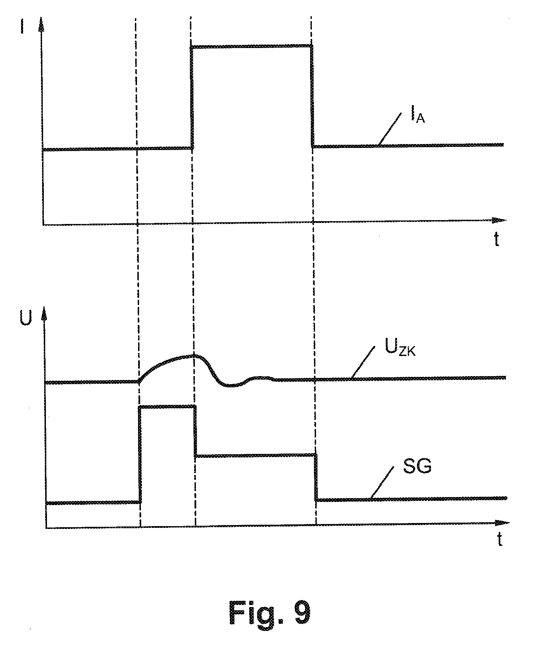

Fig. 9 zeigt einen zeitlichen Verlauf des Ausgangsstroms I_{A}, der Zwischenkreisspannung U_{ZK} sowie der Stellgröße SG. Vorteilhaft wird in diesem Beispiel so rechtzeitig vor einem Impuls dahingehend in den Sollwert der Zwischenkreisspannung U_{ZK} bzw. direkt in die Stellgröße SG des Reglers 4, 5 des ersten Wandlers 1 eingegriffen wird, dass die Zwischenkreisspannung U_{ZK} nicht so stark bzw. überhaupt nicht einbricht. Die Zwischenkreisspannung U_{ZK} kann durch Vorsehen einer geeigneten Zeitspanne tₚᵣₑ also deutlich konstanter gehalten werden als dies ohne diese "vorausschauende" Handlungsweise möglich wäre. In der Fig. 9 ist weiterhin gut zu sehen, dass die Zwischenkreisspannung U_{ZK} nur wenig überschwingt.

Analoge Überlegungen gelten natürlich auch z.B. bei einem Pulsende. Durch entsprechend frühes Zurücknehmen der Stellgröße SG kann ein Überschwingen der Zwischenkreisspannung U_{ZK} reduziert oder sogar verhindert werden, sodass diese (nahezu) konstant bleibt kann. In dem in Fig. 9 dargestellten Beispiel wird die Stellgröße SG beim Pulsende zurückgenommen, möglich ist natürlich auch sie etwas vor dem Pulsende zurückzunehmen.

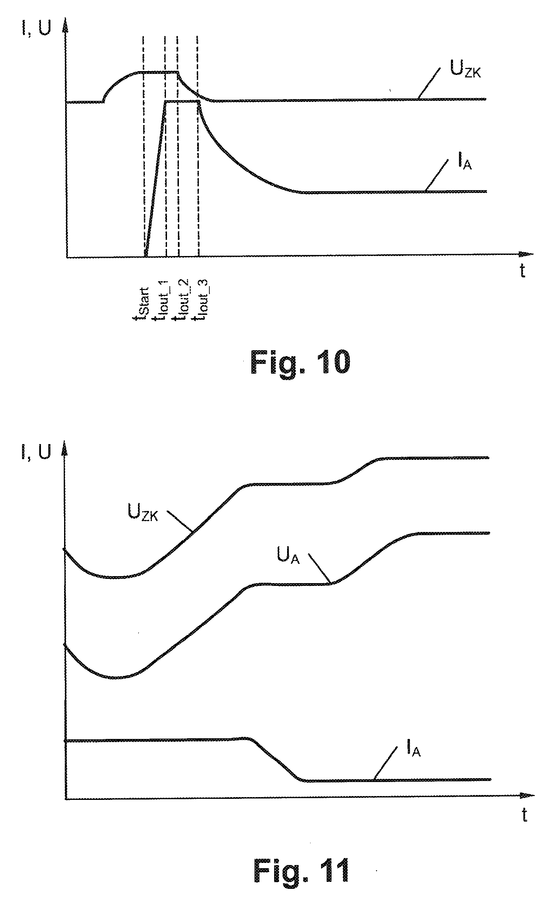

Fig. 10 zeigt nun einen Verlauf der Zwischenkreisspannung U_{ZK} und des Ausgangsstroms I_{A} bei einem Startvorgang einer Schweißung. Vorteilhaft kann die Zwischenkreisspannung U_{ZK} auch in so einem Fall vor dem Ausgangsstroms I_{A}, welcher hier zum Zeitpunkt tₛₜₐᵣₜ zu fließen beginnt, angehoben werden. Wie aus der Figur 10 ersichtlich ist, steigt der Ausgangsstrom I_{A} sehr rasch bis zum Zeitpunkt t_{Iout_1} an. Zum Zeitpunkt t_{Iout_2} wird die Zwischenkreisspannung U_{ZK} wieder zurückgenommen und ab dem Zeitpunkt t_{Iout_3} sinkt der Ausgangsstrom I_{A} auf einen (quasi) stationären Wert. Durch die beschriebene Vorgangsweise steht beim Prozessstart mehr Ausgangsleistung zur Verfügung, bzw. wird die Steilheit des Anstiegs des Ausgangsstroms I_{A} deutlich erhöht.

Fig. 11 zeigt schließlich einen beispielhaften Zeitverlauf des Ausgangsstroms I_{A}, der Ausgangsspannung U_{A} sowie der Zwischenkreisspannung U_{ZK} bei einem Ladevorgang einer Batterie Hierbei wird die Zwischenkreisspannung U_{ZK} - wie aus der Fig. 11 ersichtlich ist - vorteilhaft in Abhängigkeit der Ausgangspannung UA verändert. Dadurch kann der zweite Wandler 3 beim Batterieladevorgang oder auch bei anderen Prozessen, die eine variable Ausgangsspannung in Abhängigkeit des Prozesses benötigen, laufend in einem optimalen Arbeitspunkt betrieben werden. So können beispielsweise Schaltverluste im zweiten Wandler 3 über den gesamten Ausgangsspannungsbereich gering gehalten werden.

Die Ausführungsbeispiele zeigen mögliche Ausführungsvarianten einer erfindungsgemäßen Regelung 4, 5 (eines Prozessreglers) beziehungsweise einer erfindungsgemäßen Stromquelle, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der der Regelung 4, 5 und der Stromquelle dieser bzw. dieser in den Figuren schematisch dargestellt ist und in der Realität daher mehr Bauteile als dargestellt, weniger Bauteile als dargestellt oder auch andere Bauteile umfassen kann.

Die den eigenständigen erfinderischen Lösungen zugrundeliegende Aufgabe kann der Beschreibung entnommen werden.

### Bezugszeichenaufstellung

- 1: erster Wandler
- 2: Zwischenkreiskondensator
- 3: Zweiter Wandler
- 4: Regelung
- 5: Regelung

- 6: passiver Gleichrichter
- 7: Spannungssteller
- 8: Induktivität
- 9: aktiver Gleichrichter
- 10: Wechselrichter

- 11: Transformator
- 12: Gleichrichter

- I: Strom
- I_{A}: Ausgangsstrom
- P: Leistung
- P_{ZK}: Zwischenkreisleistung
- SG: Stellgröße

- t: Zeit
- t_{Puls}: Pulsdauer
- T_{Puls}: Puls-Periodendauer
- tₚᵣₑ: Vorlaufzeit
- tₚₒₛₜ: Nachlaufzeit

- t_{Start}: Puls-Startzeit
- t_{Iout_1}: Zeitpunkt Anstiegsende
- t_{Iout_2}: Zeitpunkt U_{ZK}-Abfall
- t_{Iout_3}: Zeitpunkt I_{A}-Abfall
- U: Spannung

- U_{A}: Ausgangsspannung
- U_{E}: Eingangsspannung
- U_{H}: Hilfsspannung
- U_{TH1}: erster Spannungsschwellwert
- U_{TH2}: zweiter Spannungsschwellwert

- U_{TH3}: dritter Spannungsschwellwert
- U_{ZK}: Zwischenkreisspannung

## Patentansprüche

1. Verfahren zur Regelung einer Stromquelle mit einem ersten Wandler (1) zum Umwandeln einer Eingangsspannung (U_{E}) in eine Zwischenkreisspannung (U_{ZK}, U_{ZK1}), einem Zwischenkreiskondensator (2) sowie einemzweiten Wandler (3) zum Wandeln der Zwischenkreisspannung (U_{ZK}, U_{ZK1}) in eine Ausgangsspannung (U_{A}), wobei am Ausgang des zweiten Wandlers (3) ein Prozess geregelt und von einem digitalen Prozessregler zumindest ein Parameter und/oder dessen Wert zur Regelung der Zwischenkreisspannung (U_{ZK}, U_{ZK1}) für den ersten Wandler (1) in Abhängigkeit eines Ereignisses dessen Zeitpunkt dem Prozessregler bekannt ist am Ausgang vorgegeben wird, **dadurch gekennzeichnet, dass**
ein Sollwert zu einem berechneten Zeitpunkt vor dem Ereignis durch den Prozessregler vorgegeben wird und die Zwischenkreisspannung (U_{ZK}, U_{ZK1}) bis zu diesem Zeitpunkt angepasst wird.

2. Verfahren nach Anspruch 1, **dadurch gekennzeichnet, dass** als Parameter die Zwischenkreisspannung (U_{ZK}, U_{ZK1}) bzw. deren Sollwert, ein Schaltzeitpunkt des ersten Wandlers (1), eine Pulsbreite, ein Spitzenstrom für den zumindest einen Schalter des ersten Wandlers (1), usw. vorgegeben wird.

3. Verfahren nach Anspruch 1 oder 2, **dadurch gekennzeichnet**, die Zwischenkreisspannung (U_{ZK}, U_{ZK1}) mit Hilfe des ersten Wandlers (1) geregelt wird und ein Sollwert der Zwischenkreisspannung (U_{ZK}, U_{ZK1}) in Abhängigkeit einer zukünftigen Ausgangsspannung (U_{A}) und/oder eines zukünftigen Ausgangsstroms (I_{A}, I_{A1}) vorgegeben wird.

4. Verfahren nach einem der Ansprüche 1 bis 3, **dadurch gekennzeichnet, dass** ein Ausgangsstrom (I_{A}, I_{A1}) impulsförmig ist und die Zwischenkreisspannung (U_{ZK}, U_{ZK1}) vor einem Impuls angehoben wird.

5. Verfahren nach Anspruch 4, **dadurch gekennzeichnet, dass** die Zwischenkreisspannung (U_{ZK}, U_{ZK1}) abgesenkt wird, wenn der impulsförmige Ausgangsstrom (I_{A}, I_{A1}) seinen oberen Sollwert erreicht hat.

6. Verfahren nach Anspruch 4 oder 5, **dadurch gekennzeichnet, dass** die Zwischenkreisspannung (U_{ZK}, U_{ZK1}) bei einem kürzeren Impuls stärker angehoben wird als bei einem längeren Impuls.

7. Verfahren nach einem der Ansprüche 1 bis 6, **dadurch gekennzeichnet, dass** die Zwischenkreisspannung (U_{ZK}, U_{ZK1}) im Leerlauf der Stromquelle abgesenkt wird.

8. Digitaler Prozessregler (4, 5) für eine Stromquelle mit einem ersten Wandler (1) zum Umwandeln einer Eingangsspannung (U_{E}) in eine Zwischenkreisspannung (U_{ZK}, U_{ZK1}), einen Zwischenkreiskondensator (2) sowie einen zweiten Wandler (3) zum Wandeln der Zwischenkreisspannung in eine Ausgangsspannung (U_{A}), umfassend
- einen Eingang für die Ausgangsspannung (U_{A}) und/oder den Ausgangsstrom (I_{A}, I_{A1}),
- einen Ausgang zur Ansteuerung des zweiten Wandlers (3) sowie
- Mittel zur Ausführung eines Regelalgorithmus, bei dem die die Ausgangsspannung (U_{A}) und/oder den Ausgangsstrom (I_{A}, I_{A1}) als Regelgröße und der zweite Wandler (3) als Stellglied eines Regelkreises vorgesehen sind und bei dem ein Sollwert zu einem berechneten Zeitpunkt vor einem Ereignis dessen Zeitpunkt dem Prozessregler bekannt ist vorgegeben wird und die Zwischenkreisspannung (U_{ZK}, U_{ZK1}) bis zum Zeitpunkt angepasst wird, und
- einen Ausgang, welcher zur Beeinflussung der Zwischenkreisspannung (U_{ZK}, U_{ZK1}) in Abhängigkeit eines Schweissprozesses oder eines Batterieladeprozesses vorbereitet ist.

9. Stromquelle, umfassend einen ersten Wandler (1) zum Umwandeln einer Eingangsspannung (U_{E}) in eine Zwischenkreisspannung (U_{ZK}, U_{ZK1}), einen Zwischenkreiskondensator (2) sowie einen zweiten Wandler (3) zum Wandeln der Zwischenkreisspannung (U_{ZK}, U_{ZK1}) in eine Ausgangsspannung (UA) und einen defitalen Prozessregler (4,5) nach Anspruch 8, deren Eingang für die Ausgangsspannung (U_{A}) und/oder den Ausgangsstrom (I_{A}, I_{A1}) mit dem Ausgang der Stromquelle und deren Ausgang zur Ansteuerung des zweiten Wandlers (3) mit dem zweiten Wandler (3) verbunden ist,
**dadurch gekennzeichnet,**
**dass** der Ausgang des digitalen Prozessreglers zur Beeinflussung der Zwischenkreisspannung (U_{ZK}, U_{ZK1}) mit dem ersten Wandler (1) ist.

10. Stromquelle nach Anspruch 9, **dadurch gekennzeichnet, dass** der erste Wandler (1) einen passiven Gleichrichter (6) sowie einen damit verbundenen Spannungsteller (7) umfasst.

11. Stromquelle nach Anspruch 9 oder 10, **dadurch gekennzeichnet, dass** der erste Wandler (1) einen gesteuerten Gleichrichter (9) umfasst.

12. Stromquelle nach einem der Ansprüche 9 bis 11, **dadurch gekennzeichnet, dass** der zweite Wandler (3) einen Wechselrichter (10), einen damit verbundenen Transformator (11) und einen damit verbundenen Gleichrichter (12) umfasst.

13. Stromquelle nach einem der Ansprüche 9 bis 12, **dadurch gekennzeichnet, dass** diese als Schweißstromquelle oder Batterieladegerät ausgebildet ist.

## Claims

1. A method for controlling a power source comprising a first converter (1) for converting an input voltage (U_{E}) to an intermediate circuit voltage (U_{ZK}, U_{ZK1}), an intermediate circuit capacitor (2) and a second converter (3) for converting the intermediate circuit voltage (U_{ZK}, U_{ZK1}) to an output voltage (U_{A}), wherein a process is controlled at the output of the second converter (3), and at least one parameter and/or its value for controlling the intermediate circuit voltage (U_{ZK}, U_{ZK1}) for the first converter (1) is predefined by a digital process controller depending on an event, the instant of which is known to the process controller, at the output,
**characterized in that**
a set value is predefined by the process controller at a calculated instant prior to the event, and the intermediate circuit voltage (U_{ZK}, U_{ZK1}) is adapted up until this instant.

2. The method according to claim 1, **characterized in that** the predefined parameter is the intermediate circuit voltage (U_{ZK}, U_{ZK1}) or its set value, a switching time of the first converter (1), a pulse width, a peak current for the at least one switch of the first converter (1), etc.

3. The method according to claim 1 or 2, **characterized in that** the intermediate circuit voltage (U_{ZK}, U_{ZK1}) is controlled with the aid of the first converter (1), and a set value of the intermediate circuit voltage (U_{ZK}, U_{ZK1}) is predefined as a function of a future output voltage (U_{A}) and/or a future output current (I_{A}, I_{A1}).

4. The method according to any one of claims 1 to 3, **characterized in that** an output current (I_{A}, I_{A1}) is impulse-shaped and the intermediate circuit voltage (U_{ZK}, U_{ZK1}) is increased prior to an impulse.

5. The method according to claim 4, **characterized in that** the intermediate circuit voltage (U_{ZK}, U_{ZK1}) is reduced when the impulse-shaped output current (I_{A}, I_{A1}) has reached an upper set value.

6. The method according to claim 4 or 5, **characterized in that** the intermediate circuit voltage (U_{ZK}, U_{ZK1}) is increased more strongly during a shorter impulse than during a longer impulse.

7. The method according to any one of claims 1 to 6, **characterized in that** the intermediate circuit voltage (U_{ZK}, U_{ZK1}) is reduced when the power source is running without load.

8. A digital process controller (4, 5) for a power source comprising a first converter (1) for converting an input voltage (U_{E}) to an intermediate circuit voltage (U_{ZK}, U_{ZK1}), an intermediate circuit capacitor (2) and a second converter (3) for converting the intermediate circuit voltage to an output voltage (U_{A}), comprising
- an input for the output voltage (U_{A}) and/or output current (I_{A}, I_{A1}),
- an output for activating the second converter (3) and
- means for running a control algorithm, where the output voltage (U_{A}) and/or output current (I_{A}, I_{A1}) is provided as a controlled variable and the second converter (3) is provided as an actuator of a closed loop, and where a set value is predefined at a calculated instant prior to an event, the instant of which is known to the process controller, and the intermediate circuit voltage (U_{ZK}, U_{ZK1}) is adapted up until this instant, and
- an output which is prepared for influencing the intermediate circuit voltage (U_{ZK}, U_{ZK1}) depending on a welding process or a battery charging process.

9. A power source, comprising a first converter (1) for converting an input voltage (U_{E}) to an intermediate circuit voltage (U_{ZK}, U_{ZK1}), an intermediate circuit capacitor (2) and a second converter (3) for converting the intermediate circuit voltage (U_{ZK}, U_{ZK1}) to an output voltage (U_{A}), and a digital process controller (4, 5) according to claim 8, the input of which for the output voltage (U_{A}) and/or output current (I_{A}, I_{A1}) is connected to the output of the power source and the output of which for activating the second converter (3) is connected to the second converter (3),
**characterized in**
**that** the output of the digital process controller for influencing the intermediate circuit voltage (U_{ZK}, U_{ZK1}) is connected to the first converter (1).

10. The power source according to claim 9, **characterized in that** the first converter (1) comprises a passive rectifier (6) and a voltage regulator (7) connected to it.

11. The power source according to claim 9 or 10, **characterized in that** the first converter (1) comprises a controlled rectifier (9).

12. The power source according to any one of claims 9 to 11, **characterized in that** the second converter (3) comprises an inverted rectifier (10), a transformer (11) connected to it and a rectifier (12) connected to the latter.

13. The power source according to any one of claims 9 to 12, **characterized in that** it is configured as a welding power source or battery charging device.

## Revendications

1. Procédé de régulation d'une source de courant avec un premier convertisseur (1) pour la conversion de la tension d'entrée (U_{E}) un une tension de circuit intermédiaire (U_{ZK}, U_{ZK1}), un condensateur de circuit intermédiaire (2) ainsi qu'un deuxième convertisseur (3) pour la conversion de la tension de circuit intermédiaire (U_{ZK}, U_{ZK1}) en une tension de sortie (U_{A}), un processus étant régulé à la sortie du deuxième convertisseur (3) et au moins un paramètre et/ou sa valeur étant prédéterminée par un régulateur de processus digital pour la régulation de la tension de circuit intermédiaire (U_{ZK}, U_{ZK1}) pour le premier convertisseur (1) en fonction d'un événement à la sortie, dont le moment est connu du régulateur de processus,
**caractérisé en ce que**
une valeur de consigne est prédéterminée à un moment calculé avant l'événement par le régulateur de processus et la tension de circuit intermédiaire (U_{ZK}, U_{ZK1}) est adaptée jusqu'à ce moment.

2. Procédé selon la revendication 1, **caractérisé en ce que**, en tant que paramètre, la tension de circuit intermédiaire (U_{ZK}, U_{ZK1}) ou sa valeur de consigne, un moment de commutation du premier convertisseur (1), une largeur d'impulsion, un courant de crête pour l'au moins un commutateur du premier convertisseur (1) etc. est prédéterminé.

3. Procédé selon la revendication 1 ou 2, **caractérisé en ce que** la tension de circuit intermédiaire (U_{ZK}, U_{ZK1}) est régulée à l'aide du premier convertisseur (1) et une valeur de consigne de la tension de circuit intermédiaire (U_{ZK}, U_{ZK1}) est prédéterminée en fonction d'une tension de sortie future (U_{A}) et/ou d'un courant de sortie futur (I_{A}, I_{A1}).

4. Procédé selon l'une des revendications 1 à 3, **caractérisé en ce qu'**un courant de sortie (I_{A}, I_{A1}) présente la forme d'impulsions et la tension de circuit intermédiaire (U_{ZK}, U_{ZK1}) est augmentée avant une impulsion.

5. Procédé selon la revendication 4, **caractérisé en ce que** la tension de circuit intermédiaire (U_{ZK}, U_{ZK1}) est diminuée lorsque le courant de sortie (I_{A}, I_{A1}) en forme d'impulsions a atteint sa valeur de consigne supérieure.

6. Procédé selon la revendication 4 ou 5, **caractérisé en ce que** la tension de circuit intermédiaire (U_{ZK}, U_{ZK1}) est augmentée plus fortement lors d'une impulsion plus courte que lors d'une impulsion plus longue.

7. Procédé selon l'une des revendications 1 à 6, **caractérisé en ce que** la tension de circuit intermédiaire (U_{ZK}, U_{ZK1}) est diminuée dans la marche à vide de la source de courant.

8. Régulateur de processus (4, 5) pour une source de courant avec un premier convertisseur (1) pour la conversion d'une tension d'entrée (U_{E}) en une tension de circuit intermédiaire (U_{ZK}, U_{ZK1}), un condensateur de circuit intermédiaire (2), ainsi qu'un deuxième convertisseur (3) pour la conversion de la tension de circuit intermédiaire en une tension de sortie (U_{A}), comprenant :
- une entrée pour la tension de sortie (U_{A}) et/ou le courant de sortie (I_{A}, I_{A1}),
- une sortie pour le pilotage du deuxième convertisseur (3) ainsi que
- des moyens pour la réalisation d'un algorithme de régulation, dans lequel la tension de sortie (U_{A}) et/ou le courant de sortie (I_{A}, I_{A1}) est prévu en tant que grandeur de régulation et le deuxième convertisseur (3) est prévue entant qu'organe de régulation d'un circuit de régulation et dans lequel une valeur de consigne est prédéterminée à un moment calculé avant un événement dont le moment est connu du régulateur de processus et la tension de circuit intermédiaire (U_{ZK}, U_{ZK1}) est adaptée jusqu'au moment et
- une sortie qui est préparée pour l'influence de la tension de circuit intermédiaire (U_{ZK}, U_{ZK1}) en fonction d'un processus de soudure ou d'un processus de charge d'une batterie.

9. Source de courant comprenant un premier convertisseur (1) pour la conversion d'une tension d'entrée (U_{E}) en une tension de circuit intermédiaire (U_{ZK}, U_{ZK1}), un condensateur de circuit intermédiaire (2) ainsi qu'un deuxième convertisseur (3) pour la conversion de la tension de circuit intermédiaire (U_{ZK}, U_{ZK1}) en une tension de sortie (U_{A}) et régulateur de processus digital (4, 5) selon la revendication 8, dont l'entrée pour la tension de sortie (U_{A}) et/ou le courant de sortie (I_{A}, I_{A1}) est reliée avec la sortie de la source de courant et dont la sortie est reliée, pour le pilotage du deuxième convertisseur (3), avec le deuxième convertisseur (3),
**caractérisée en ce que**
la sortie du régulateur de processus digital est reliée, pour l'influence de la tension de circuit intermédiaire (U_{ZK}, U_{ZK1}) avec le premier convertisseur (1).

10. Source de courant selon la revendication 9, **caractérisée en ce que** le premier convertisseur (1) comprend un redresseur passif (6) ainsi qu'un régulateur de tension (7) relié avec celui-ci.

11. Source de courant selon la revendication 9 ou 10, **caractérisée en ce que** le premier convertisseur (1) comprend un redresseur (9) contrôlé.

12. Source de courant selon l'une des revendications 9 à 11, **caractérisée en ce que** le deuxième convertisseur (3) comprend un onduleur (10), un transformateur (11) relié à celui-ci et un redresseur (12) relié à celui-ci.

13. Source de courant selon l'une des revendications 9 à 12, **caractérisée en ce que** celle-ci est conçue comme une source de courant de soudure ou comme un appareil de charge de batterie.
